# NEUE EUROPÄISCHE PATENTSCHRIFT

(11) **EP 0 550 508 B2**
(45) Veröffentlichungstag und Bekanntmachung des Hinweises auf die Entscheidung über den Einspruch: **21.10.1998**
(45) Hinweis auf die Patenterteilung: 01.02.1995
(21) Anmeldenummer: 91916552.2
(22) Anmeldetag: 20.09.1991
(51) Int. Cl.: B01D 1/18

(54) **VERFAHREN ZUR SPRÜHTROCKNUNG VON WERTSTOFFEN UND WERTSTOFFGEMISCEHEN UNTER VERWENDUNG VON ÜBERHITZTEM WASSERDAMPF**
PROCESS FOR THE SPRAY-DRYING OF VALUABLE SUBSTANCES AND MIXTURES THEREOF USING SUPERHEATED WATER VAPOUR
PROCEDE DE SECHAGE DE MATIERES DE VALEUR ET DE MELANGES DE MATIERES DE VALEUR PAR PULVERISATION AVEC UTILISATION DE VAPEUR D'EAU SURCHAUFFEE

(30) Priorität: 28.09.1990 DE 4030688
(43) Veröffentlichungstag der Anmeldung: 14.07.1993
(73) Patentinhaber: Henkel Kommanditgesellschaft auf Aktien, 40191 Düsseldorf (DE)
(72) Erfinder: RÄHSE, Wilfried, D-4000 Düsseldorf 13 (DE); BAUER, Volker, D-4000 Düsseldorf 13 (DE)
(86) Internationale Anmeldenummer: EP9101798
(87) Internationale Veröffentlichungsnummer: WO9205849

(56) Entgegenhaltungen:
- GB-A- 1 363 419
- US-A- 2 217 547
- US-A- 3 564 723
- US-A- 3 956 521
- US-A- 4 376 010
- A.V. Heaton & R. Benstead, ECRC, Steam recompressin drying, 2nd International Symposium on The Large Scale Applications of Heat Pumps, York, UK, 25-27. September 1984, Seiten 177-188
- Trommelen et al., AIChE Journal, Vol. 16, No. 5, Sept. 1970, Seiten 857-867
- W. H. Gauvin & M. H. Costin, Spray drying in superheated steam - A technoeconomic study, Dep. of Chemical Engineering, McGill University, Montreal, Canada (1979)
- K. Masters: "Spray Drying" Leonard Hill Books, London, 1972, Seiten 314 u. 315
- Seifen, Oele, Fette, Wachse, Nr. 8/1988 (ohne Seitenangabe)
- K. Masters: Spray-Drying Handbook (1985), George Godwin, fourth edition, London (GB), Seiten 320-326
- "Neue Erfahrungen mit dem DDS-Verdampfungstrockner", Arne Sloth Jensen; Zuckerindustrie 115 (1990) Nr. 10, Seiten 827-833

## Beschreibung

Die Erfindung betrifft ein Verfahren zur Gewinnung feinteiliger fester schütt- bzw. rieselfähiger Wertstoffe oder Wertstoffgemische, die als Netz-, Wasch- und/oder Reinigungsmittel und/oder zur Verwendung in solchen Mitteln geeignet sind, aus ihren wäßrigen Zubereitungen. Das erfindungsgemäße Verfahren setzt dabei die bekannten Prinzipien der Sprühtrocknung ein, wobei jetzt jedoch mit überhitztem Wasserdampf als Heißgasstrom gearbeitet wird.

Die Sprühtrocknung wäßriger Zubereitung von Wertstoffen der genannten Art findet seit Jahrzehnten weltweit in großtechnischem Maßstab statt. Als Trocknungsgasstrom werden Heißluft bzw. Gemische von Luft und heißen Verbrennungsabgasen eingesetzt. Textilwaschpulver bzw. Wertstoffe und/oder Wertstoffgemische zur Herstellung von Textilwaschmitteln in schütt- und rieselfähiger Pulverform werden in entsprechenden Sprühtürmen in der Regel im Bereich des Umgebungsdrucks in Gleichstrom- oder häufiger in der Gegenstromfahrweise großtechnisch gewonnen. Aus der umfangreichen Fachliteratur sei lediglich beispielhaft verwiesen auf Masters, K. "Spray drying" - An introduction to principles of operational practice and applications - Leonard Hill Books, London, An Intertext Publisher 1972.

Die Vor- und Nachteile dieses Trocknungsverfahrens unter Einsatz von Heißluft als Trockengas sind bekannt und in der Fachliteratur ausführlich beschrieben. Zu den Vorteilen zählt unter anderem neben der beliebigen Verfügbarkeit der Gasphase die Möglichkeit, in offenen Systemen - üblicherweise entsprechenden Sprühtürmen - arbeiten zu können, die eine Entsorgung der Heißgasphase durch Abgeben in die Umluft technisch problemlos ermöglichen. Intensive physikalisch-chemische Untersuchungen über den Ablauf des Trocknungsverfahrens haben darüberhinaus gezeigt, daß die Trocknung mit Heißluft auch schon bei Einsatz vergleichsweise milder Heißgastemperaturen wirkungsvoll und rasch abläuft. Der Trocknungsvorgang am wäßrigen Guttropfen setzt weitgehend unabhängig von der Temperatur des verwendeten Heißgases schon bei vergleichsweise niederen Temperaturen - beispielsweise im Temperaturbereich von etwa 40°C - ein und setzt sich unter vergleichsweise langsamer Steigerung der Tropfentemperatur bis zum Siedebereich des Wassers unter Normaldruck wirkungsvoll fort, so daß damit eine nur mäßige Temperaturbelastung des zu trocknenden Gutes gegeben ist. Insgesamt verläuft der Trocknungsvorgang in Heißluft rasch und gerade auch in den letzten Trocknungsstufen wirkungsvoll, so daß die Auftrocknung der Wertstoffe zum rieselfähigen Gut mit einer vergleichsweise milden Temperaturbelastung der Wertstoffe im Trocknungsvorgang verbunden werden kann.

Allgemein bekannt sind aber auch die Nachteile und Einschränkungen dieses Verfahrenstyps gerade für das durch die Erfindung angesprochene Sachgebiet der Trocknung von Wertstoffen bzw. Wertstoffgemischen beispielsweise aus den Bereichen der Textilwaschmittel und/oder Reinigungsmittel. Lediglich beispielhaft sei auf die folgende- Punkte verwiesen: Zahireiche Wertstoffe dieser Sachgebiete sind - insbesondere als organische Komponenten - oxidationsempfindlich. Die Behandlung mit Heißluft kann insbesondere im höheren Temperaturbereich zu substantiellen Werteinbußen führen. Die Auftrocknung rein oder weitgehend organischer Wertstoffe, beispielsweise entsprechender Tenside auf Naturstoffbasis, schafft beträchtliche Probleme aus der Brand- oder gar Explosions-Gefahr des Trockengutes. Wichtige Wertstoffkomponenten, insbesondere Niotenside des Waschmittelbereichs zeigen eine mehr oder weniger starke Pluming-Neigung und werden zusammen mit der dampfbeladenen Abluft aus dem Turm ausgetragen. Insgesamt besteht die erhöhte Gefahr der Umweltbelastung durch die großen Mengen der im Sprühturm durchgesetzten wäßrigen, festen und gasförmigen Materialanteile bzw. Hilfsstoffe. Überlegungen zur Kreislaufführung des Trocknungsgasstromes haben in der gewerblichen Anwendung dieses Verfahrens keinen durchgreifenden Niederschlag gefunden.

Seit Anfang dieses Jahrhunderts ist bekannt, daß zur Trocknung wäßriger Wertstoffzubereitungen anstelle der Heißluft auch überhitzter Wasserdampf eingesetzt werden kann. Erste Vorschläge zu einer solchen Verfahrensmodifikation gehen auf das Jahr 1908 zurück. Insbesondere in den letzten Jahrzehnten ist in der Literatur die Möglichkeit solcher Trocknungsverfahren unter Einsatz von überhitztem Wasserdampf als Heißgasmedium intensiv untersucht und mit den in der Praxis bekannten Trocknungsverfahren auf Basis von Heißluft verglichen worden. Aus der umfangreichen einschlägigen Literatur sei auf die nachfolgenden Veröffentlichungen verwiesen, die ihrerseits umfangreiche Literaturverzeichnisse zu diesem Arbeitsgebiet beinhalten: A.M.Trommelen et al. "Evaporation and Drying of Drops in Superheated Vapors" AlChE Journal 16 (1970) 857 - 867; Colin Beeby et al. "STEAM DRYING'' Plenary Lecture, Proc. 4th Int. Drying Sym. Kyoto (eds. R. Toei and Arun S. Mujumdar) 1984, Bd.1, 51 - 68 sowie W.A. Stein "Berechnung der Verdampfung von Flüssigkeit aus feuchten Produkten im Sprühturm" Verfahrenstechnik 7 (1973) 262 - 267. Aus der jüngeren Patentliteratur sei verwiesen auf die EP-A1 058 651 und EP-A2 153 704.

Eine rechnerisch-theoretische Auseinandersetzung mit möglichen Vor- und Nachteilen beim Austausch konventioneller Heißgase in Trocknungsverfahren durch überhitzten Wasserdampf als Trocknungsgas findet sich in der Veröffentlichung W.H. Gauvin & M.H. Costin, Spray drying in superheated steam - A technoeconomic study, Dep. of Chemical Engineering, McGill Universiry, Montreal, Canada (1979). Die Verfasser dieser Veröffentlichung verweisen in diesem Zusammenhang wiederholt auf die der Fachwelt bekannte Tatsache, daß der Einsatz von überhitztem Wasserdampf als Trocknungsgas für thermisch empfindliche Materialien ungeeignet ist, Eine figürliche Darstellung eines Sprühtrocknungsverfahrens mit überhitztem Wasserdampf als Trocknungsmedium in dieser Veröffentlichung sieht vor, den aus dem Heißdampf-Kreislauf abgezogenen Brüdenteilstrom einer Kondensation zu unterwerten und dabei gasförmige Anteile vom Kondensat abzutrennen.

Die Offenbarung der GB-A-1363419 beschreibt eine Modifikation der in der Praxis üblichen Sprühtrocknung wäßriger Detergens-Zubereitungen mit heißen Brenngasen, bei der ein Anteil des Wasserdampf enthaltenden Abgasstromes aus der Trocknungsstufe im Kreislauf in die Trocknungsstufe zurückgeführt wird. Zuvor wird dieser rückgeführte Anteil mit frischem Heißgas vermischt und damit wieder auf Einsatztemperaturen aufgeheizt. Als theoretische Möglichkeit wird erwähnt, diese Aufheizung des Kreislaufgasstromes auch indirekt vornehmen zu können, was dann die Notwendigkeit schafft, überhitzten Wasserdampf im Kreislauf zu führen, Diese Variante wird aber ausdrücklich als weniger wirksam und kostenungünstig bezeichnet. Der nicht im Kreislauf geführte Abgasteilstrom soll nach den Angaben dieser Literaturstelle in die Atmosphäre entlassen werden.

Die in die Praxis umgesetzten Trocknungsverfahren unter Einsatz von überhitztem Wasserdampf als Heißgasstrom setzen vergleichsweise unkomplizierte Naßmaterialien als zu trocknendes Gut ein. So sind entsprechende technische Verfahren entwickelt worden für die Trocknung von nasser Braunkohle, von Sand, zur Herstellung von Tiertrockenfutter oder zur Trocknung von Papierpulpe. Durchweg handelt es sich hier um Einsatzmaterialien, die in den zur Trocknung benötigten Bereichen von Arbeitsbedingungen - insbesondere Temperatur und Zeitdauer - als vergleichsweise unproblematisch anzusehen sind. Eine der bereits zitierten Veröffentlichungen bringt sorgfältige Untersuchungen zur Ausdehnung dieses Arbeitsprinzips auf die Trocknung von Naßmaterialien unterschiedlichsten Ursprungs. A.M. Trommelen et al. beschreiben in "Evaporation and Drying of Drops in Superheated Vapors" a.a.O. eingehende Untersuchungen an isolierten und eine vorbestimmte Teilchengröße aufweisenden Tropfen verschiedenster Naßmaterialien, einerseits bei ihrer Behandlung mit vorbeistreichender Heißluft, andererseits mit vorbeistreichendem Heißdampf. Untersucht werden unter anderem die Temperaturabhängigkeit der Trocknungsgeschwindigkeit, der charakteristische Temperaturverlauf im jeweils untersuchten Tropfen in Abhängigkeit vom eingesetzten Heißgasstrom und dessen vorgegebener Temperatur sowie charakteristische Abweichungen der jeweils miteinander zu vergleichenden getrockneten Materialkörner. Als zu trocknendes wäßriges Gut wird reines Nasser, verschiedenartigste wäßrige Aufbereitungen aus dem Lebensmittelsektor wie wäßrige Sucrose-Lösung, Tomatensaft, Kaffee-Extrakt und Milch, Lösungen und Suspensionen rein anorganischer Materialien anhand einer Tonsuspension und wäßrige Lösungen von Natriumsulfat sowie Kaliumnitrat sowie schließlich Tropfen einer wäßrigen Lösung eines handelsüblichen Textilwaschmittels eingesetzt. Angaben zur Zusammensetzung des eingesetzten Textilwaschmittels werden nicht gemacht. Untersucht werden insbesondere die Einflüsse der Arbeitstemperatur des jeweiligen Heißgasstromes auf den Trocknungsverlauf und die Trocknungsgeschwindigkeit, der Temperaturverlauf innerhalb des zu trocknenden Guttropfens über den Zeitraum des Trocknungsvorgangs hinweg sowie der Einfluß der jeweiligen Feststoffbeladung auf den Temperaturverlauf des Guttropfens während des Trocknungsvorganges sowie schließlich die physikalische Beschaffenheit des aufgetrockneten Gutkornes. Untersuchungen zur chemischen Beschaffenheit des getrockneten Gutes und/oder seiner Wiederverwendbarkeit sind insbesondere im Fall des Textilwaschmittels nicht angestellt worden. Insbesondere wird nicht untersucht, in welchem Ausmaß Temperatur-sensitive Mischungskomponenten bei der dargestellten vollständigen Auftrocknung des Mehrstoffgemisches geschädigt werden.

Übereinstimmend gilt für alle untersuchten Materialproben:
Die Trocknungsgeschwindigkeit ist im Temperaturbereich von 150°C für Heißluft deutlich höher als beim Einsatz des entsprechend überhitzten Wasserdampfs. Erst die Steigerung der Arbeitstemperatur auf 250°C bringt eine Annährung der Trockungsgeschwindigkeiten, wobei auch hier im allgemeinen die Heißluft noch leichte Vorteile zeigt. Dieses Ergebnis steht in Übereinstimmung mit anderen Arbeiten zu diesem Themenkomplex die zeigen, daß erst bei ca. 400°C eine völlige Angleichung der Trocknungsgeschwindigkeiten der beiden Heißgasmedien stattgefunden hat.

Ein für das Verständnis der vorliegenden Erfindung wesentlicher weiterer grundsätzlicher Unterschied ist auffallend: Beim Arbeiten mit dem Heißluftstrom setzt der Trocknungsvorgang bereits bei niederen Guttemperaturen wirkungsvoll ein. Die Wasserabreicherung ist dabei derart ausgeprägt, daß beim Erreichen der Guttemperatur von etwa 100°C die Trocknung schon nahezu abgeschlossen ist. So sind beispielsweise bis zu ca. 90 % des insgesamt vorhandenen Wassers zu diesem Zeitpunkt aus dem Tropfen bereits ausgetragen. Völlig anders sieht der Verlauf der Tropfentemperatur beim Einsatz von Heißdampf aus. Durch Kondensation des Heißdampfes auf dem kühleren Einsatzgut und Abgabe der Kondensationswärme an das zu trocknende Gut findet eine spontane Aufheizung des wäßrigen Tropfens auf die Siedetemperatur des Wassers unter Arbeitsbedingungen statt, beim Arbeiten unter Normaldruck also auf Temperaturen von etwa 100°C. Diese Siedetemperatur wird als Mindesttemperatur während des gesamten Trocknungszeitraums im Guttropfen beibehalten. Die jeweilige Beladung der wäßrigen Phase mit den zu gewinnenden Trockenstoffen führt - in Abhängigkeit vom Trocknungsgrad des Tropfens - zu individuellen Abweichungen des Temperaturverlaufs nach oben zu einem früheren oder späteren Zeitpunkt.

Eine weitere an sich bekannte Gesetzmäßigkeit großtechnischer Sprühtrocknungsverfahren bekommt im Zusammenhang mit der erfindungsgemäßen Aufgabenstellung einflußreiche Bedeutung: Beim Versprühen von Lösungen und/oder Slurries von Wertstoffen aus dem erfindungsgemäß betroffenen Sachgebiet der Netz-, Wasch- und/oder Reinigungsmittel werden Tropfen mit individueller Teilchengröße in beträchtlicher Bandbreite gebildet und dem Trocknungsprozeß im Heißgasstrom ausgesetzt. Dieser Sachverhalt zeigt sich in der Siebanalyse des gewonnenen trockenen Turmpulvers, die beispielsweise den überwiegenden Gutanteil mit Korndurchmessern im Bereich von 0,05 - 0,5 mm aufweisen. Für den individuellen Trocknungszustand des jeweils betroffenen Teilchens in der Heißgasphase macht sich die tatsächliche Teilchengröße des jeweiligen Tropfens sehr stark bemerkbar. Der bis zur vollständigen Auftrocknung des jeweiligen Tropfens benötigte Zeitraum steigt mit wachsender Tropfengröße überproportional stark an, so daß im Vergleich individueller Tropfen unterschiedlicher Teilchengröße gegeneinander der Quotient aus dem jeweils benötigten Zeitraum zur Einstellung eines vorbestimmten Trocknungsgrades ein Vielfaches des entsprechenden Verhältnisses der Teilchengrößen zueinander ausmacht. Die einschlägige Fachliteratur zeigt hier beispielsweise Multiplikationsfaktoren im Bereich von 20 - 100 für die jeweils betroffenen Grenzwerte.

Sprühtrocknungsverfahren arbeiten bekanntlich mit einer vergleichsweise geringen Feststoffdichte innerhalb des Trocknungsraumes, so daß nur ein sehr begrenzter Temperaturausgleich im partiell oder schon weitgehend aufgetrockneten Gut durch Kollision und Berührung der Einzelteilchen miteinander stattfinden kann. Die Sprühzone unterscheidet sich damit deutlich von der Aufheizung beispielsweise in einer Wirbelschicht, in der bekanntlich das feinteilige Gut in einer sehr viel größeren Raumdichte eingesetzt wird, so daß ein wirkungsvoller Temperaturausgleich zwischen den individuellen Teilchen stattfinden kann.

Für den Ersatz des Heißgasstromes auf Basis Luft durch überhitzten Wasserdampf leiten sich damit unter anderem die folgenden Ergebnisse ab: Die in der Praxis des großtechnischen Einsatzes geforderten hohen Verdampfungsgeschwindigkeiten fordern beim Arbeiten mit überhitztem Wasserdampf vergleichsweise hohe Arbeitstemperaturen. Die Guttemperatur im Naßmaterial erreicht von Anfang an den Grenzbereich von 100°C und kann unter dem Einfluß der vorgegebenen hohen Heißdampftemperatur im Endstadium der Trocknung rasch nach oben entgleiten. Gefährdet ist dabei ganz besonders der Feingutanteil in den Endstadien des Trocknungsschrittes, in dem das entsprechende Grobkorn noch einen unzureichenden Trocknungszustand aufweist.

Für temperatursensitive Materialien der erfindungsgemäß betroffenen Art sind das begreiflicherweise substantielle Gefährdungen. Zu berücksichtigen ist darüberhinaus die für die Trocknung mit überhitztem Wasserdampf bekannte Tatsache, daß das aus dem Verfahren ausgeschleuste Trockengut mit Wasserdampf beladen ist, der bei der eintretenden Abkühlung sofort kondensiert und damit als Restfeuchte im Gut verbleibt. Die hier nur auszugsweise dargestellten Schwierigkeiten der Anwendung des Heißdampfes als Trocknungsmedium auf Einsatzmaterialien der erfindungsgemäß betroffenen Art dürften dazu geführt haben, daß bis zum heutigen Tage die praktische Anwendung dieses an sich bekannten Verfahrenstyps im Bereich der erfindungsgemäß einzusetzenden Stoffgemische unbekannt ist.

Die Erfindung geht von der Aufgabe aus Bedingungen aufzuzeigen, wie trotz der geschilderten Schwierigkeiten der Austausch der Heißlutt durch überhitzten Wasserdampf beispielsweise bei der Herstellung von pulverförmigen, lagerbeständig schütt- und rieselfähigen Textilwaschmitteln oder bei der Gewinnung entsprechender Handelsformen von Wertstoffen aus diesem Bereich, wie Tensiden oder tensidhaltigen Mehrkomponentengemischen, gelingt.

### Die erfindungsgemäße Lehre

Gegenstand der Erfindung ist dementsprechend ein Verfahren zur Gewinnung feinteilger fester schütt- bzw. rieselfähiger Wertstoffe oder Wertstoffgemische, die als Netz-, Wasch- und/oder Reinigungsmittel und/oder zur Verwendung in solchen Mitteln geeignet sind, aus ihren wäßrigen Zubereitungen durch deren Sprühtrocknung in einem überhitzten Wasserdampf enthaltenden Heißgasstrom im Bereich des Normaldrucks, wobei im geschlossenen System mit einem Wasserdampfkreislaufstrom gearbeitet wird, dem der verdampfte Wasseranteil des Einsatzgutes entzogen und der insbesondere im Trocknungsschritt abgegebene Energiebetrag wieder zugeführt wird. Das erfindungsgemäße Verfahren ist dadurch gekennzeichnet, daß mit überhitztem, auf Einsatztemperaturen oberhalb 150°C und bevorzugt von wenigstens 200°C aufgeheiztem Wasserdampf als Heißgasstrom gearbeitet und dabei die Trocknung des partikulären Gutes vor dessen Gefährdung durch thermische Einwirkung abgebrochen wird, wobei die lagerbeständige Schütt- bzw. Rieselfähigkeit des derart partiell aufgetrockneten Gutes durch Zusatz solcher Mischungsbestandteile sichergestellt wird, die zur Bindung begrenzter Wassermengen befähigt sind. Neben oder anstelle dieser zuletzt genannten Hilfsmaßnahme kann das erfindungsgemäße Verfahren auch eine Nachbehandlungs- bzw. Nachtrocknungsstufe für das primär angefallene Gut vorsehen, das in seiner Gesamtheit oder wenigstens in einem Anteil des körnigen Gutes noch zu hohe Anteile an Restfeuchte aufweist. Dabei wird diese Nachbehandlung und/oder Nachtrocknung unter derart schonenden Verfahrensbedingungen vorgenommen, daß die unerwünschte Gefährdung durch thermische Einwirkung nicht mehr vorliegt. Gleichwohl kann auch insbesondere eine solche Nachtrocknungsstufe unter Einsatz von überhitztem Wasserdampf als Heißgas vorgenommen werden. Das erfindungsgemäße Verfahren ist weiterhin dadurch gekennzeichnet, daß wenigstens ein Anteil des aus dem Kreislauf abgezogenen Wasserdampf-Teilstromes kondensiert und in einer Naßwäsche zur Reinigung des abgezogenen Dampf-Teilstromes von mitgetragenen Gutanteilen verwendet und dann zusammen mit den darin vorliegenden ausgekreisten Wertstoffanteilen in das Trocknungsverfahren zurückgeführt wird.

Die Erfindung betrifft in weiteren Ausführungsformen die Anwendung dieses Verfahrens zur Gewinnung von rieselfähigen Tensid-Feststoffen, insbesondere aus dem Bereich der Aniontenside auf Naturstoffbasis, weiterhin die Anwendung auf die Gewinnung getrockneter Wertstoffe auf Silikatbasis, die insbesondere in Textilwaschmitteln Verwendung finden können, sowie schließlich auf die Anwendung des beschriebenen Verfahrens zur Gewinnung sogenannter Textilwaschmittel-Turmpulver, denen temperatursensitive und/oder wasserdampfflüchtige Komponenten zum Aufbau beziehungsweise zur vollen Rezeptierung der fertigen Textilwaschmittel zugesetzt werden können.

### Einzelheiten zur erfindungsgemäßen Lehre

Das erfindungsgemäße Verfahren baut auf der Erkenntnis auf, daß unter bewußter Inkaufnahme gewisser Einschränkungen bezüglich des Trocknungsergebnisses im Endprodukt von den vielgestaltigen Vorteilen des Austausches der Heißluft durch überhitzten Wasserdampf im Sprühtrocknungsverfahrenauch bei den erfindungsgemäß betroffenen sensitiven und gegebenenfalls komplexen Stoffmischungen Gebrauch gemacht werden kann. Als ein wesentliches Element sieht die Erfindung hier vor im Trockengut Restfeuchten zu tolerieren, die - in Abhängigkeit vom jeweiligen bestimmten Einzelfall - durchaus beträchtlich sein können, gleichzeitig aber entweder durch gegebenenfalls mitzuverwendende Hilfsmittel die lagerbeständige Schütt- und Rieselfähigkeit des derart aufgetrockneten kornförmigen Gutes sicherzustellen und/oder eine Nachbehandlungs- und/oder eine Nachtrocknungsstufe vorzusehen. Die Hilfsstoffe können dabei, wie im Nachfolgenden noch geschildert wird, ihrerseits ausgewählte Wertstoffe für den geplanten Einsatzzweck oder Inertstoffe sein. Erfindungsgemäß gelingt damit die Einhaltung der Qualitätsnormen der bekanntlich komplexen Anforderungen an die durch die Erfindung betroffenen Mehrstoffgemische auf Basis organischer und anorganischer Mischungskomponenten - beispielsweise Textilwaschmittel - ohne Qualitätseinbuße jedoch unter Wahrnehmung der Vorteile einer solchen Arbeitsweise der Trocknung mit überhitztem Wasserdampf. Die Abgabe unerwünschter Komponenten in die Umgebungsluft entfällt, Oxidationsprozesse an entsprechend gefährdeten Komponenten der Netz-, Wasch- und Reinigungsmittel sind unterbunden, Brand- und Explosionsgefahren sind ausgeschaltet, der Trocknungsdampf wird im Kreislauf gefahren, lediglich der aus dem zu trocknenden Gut entstandene Dampfteilstrom bedarf der Reinigung. Dabei anfallende mitgetragene Gutanteile und gegebenenfalls durch partielle Kondensation entstehende Flüssiganteile können im Kreislauf in das Trocknungsverfahren zurückgeführt werden und weitere bekannte technologische Vorteile für die Auslegung der entsprechenden Einrichtungen können genutzt werden.

Ein wesentlicher Gedanke zum Verständnis der erfindungsgemäßen Lehre liegt in der Möglichkeit zum Verzicht auf die Einstellung optimaler Trocknungsergebnisse durch Heißdampfeinwirkung im Verfahrensendprodukt. Restfechten gegebenenfalls auch durchaus beträchtlichen Ausmaßes können toleriert werden, wenn in der Zusammensetzung des Gutes sichergestellt ist, daß durch eine Art "Innerer Trocknung" eine so weitgehende Bindung dieses Restwassers stattfindet, daß die lagerbeständige Schütt- und Rieselfähigkeit des Trockengutes gewährleistet ist.

Neben oder anstelle dieser Hilfsmaßnahme sieht die Lehre der Erfindung die Nachbehandlung des primär angefallenen, teilgetrockneten Gutes vor.

Eine solche Nachbehandlung wird durch zwei technische Konzeptionen bestimmt, die auch miteinander verbunden werden können.

Die erste dieser Konzeptionen geht von der eingangs geschilderten Tatsache aus, daß der individuelle Auftrocknungsgrad des jeweils betroffenen Tröpfchens von seiner Teilchengröße bestimmt wird. Wird im erfindungsgemäßen Sinne das Sprühtrocknungsverfahren zu einem Zeitpunkt abgebrochen, an dem noch beträchtliche Mengen an Restfeuchte im Gut vorliegen, dann wird eine integrale Betrachtung des Restfeuchtegehaltes der Wirklichkeit nur teilweise gerecht. In der differentiellen Betrachtung der Verteilung dieser Restfeuchte über die einzelnen Gutanteile zeigt sich, daß die Fein- beziehungsweise Feinstanteile sehr weitgehend oder vollständig aufgetrocknet sein können, während die gröberen Gutanteile noch so beträchtliche Feuchtigkeitsmengen enthalten, daß eine lagerbeständige Schütt- und Rieselfähigkeit für das der Sprühzone entnommene Gut noch nicht sichergestellt ist. In einer wichtigen Ausführungsform des erfindungsgemäßen Verfahrens wird dementsprechend eine "Nachtrocknung" des Primärgutes aus der Sprühtrocknungszone durch einen zusätzlichen Behandlungsschritt erreicht, der - ohne das pulverförmige Gut einer Gefährdung durch Verklebung auszusetzen - zu einer Homogenisierung des Feuchtegehalts über das Gesamtgut unabhängig von der individuellen Teilchengröße führt. Auf diese Weise kann aus den noch vergleichsweise feuchten gröberen Anteilen des Gutes soviel an Restfeuchte in das Fein- und Feinstgut übertragen werden, daß nach diesem Homogenisierungsschritt die lagerbeständige Schütt- und Rieselfähigkeit des Trockengutes gewährleistet sind, ohne das es des zusätzlichen Austrages weiterer Feuchtemengen aus dem Schüttgut bedarf.

Zur Verwirklichung dieser Nachbehandlungsstufe sind alle Verfahrenstechniken geeignet, die den Feuchtigkeitsausgleich zwischen den einzelnen Partikeln unter gleichzeitiger Verhinderung eines Verklebens der Masse sicherstellen. Lediglich beispielhaft seien hier benannt, das Umwälzen oder Schütteln des primär angefallenen Gutes im kontinuierlichen oder diskontinuierlichen Verfahren. Besonders geeignet kann eine Nachbehandlung des Gutes in einer Wirbelschicht sein, die im Vergleich zum Sprühtrocknungsverfahren eine sehr viel höhere Feststoffdichte aufweist. Hierbei kann mit beliebigen Gasen, beispielsweise ganz einfach mit Umgebungsluft, gearbeitet werden. Oxidative Materialgefährdungen und/oder unerwünschte Verunreinigungen der Abluft treten hierbei nicht mehr auf, beziehungsweise sind leicht zu beherrschen. Da das zu trocknende Gut der Sprühtrocknungszone mit erhöhter Temperatur - üblicherweise im Bereich von etwa 100°C - entnommen wird, kann über eine solche nachgeschaltete Feuchtigkeitshomogenisierung im Rahmen einer Wirbelschicht, beispielsweise mit Umgebungsluft noch eine geringfügige zusätzliche Absenkung des Restfeuchte erzielt werden.

Neben oder anstelle einer solchen Hilfsmaßnahme kann im erfindungsgemäßen Verfahren aber auch eine zusätzliche Trocknung zur weiteren Absenkung der Restfeuchte vorgesehen sein. Erweist sich diese Nachtrocknung als wünschenswert, so wird im allgemeinen eine solche zusätzliche Nachtrocknungsstufe hinreichend sein. Die Nachtrocknung in einer Sequenz mehrerer Stufen ist von der Lehre der Erfindung jedoch nicht ausgeschlossen. Charakteristisch für die Nachtrocknungsstufe(n) ist, daß hier unter Bedingungen gearbeitet wird, die eine substantielle Gefährdung der Wertstoffe des Trockengutes ausschließen. Prinzipiell steht hier eine Mehrzahl von Verfahrensparametern zur Risikominderung zur Verfügung. Beispielhaft seien genannt: Absenkung der Temperatur der Heißgasphase. Verzicht auf überhitzten Wasserdampf als Heißgas und dessen Ersatz durch Trocknungsgase anderen Ursprungs, beispielsweise Luft und/oder inertgas sowie Übergang in eine andere Trocknungstechnologie.

In einer bevorzugten Ausführungsform des erfindungsgemäßen Verfahrens wird beim Einsatz eines solchen Nachtrocknungsschrittes die Feststoffdichte des zu trocknenden Gutes im Heißgasstrom substantiell erhöht, so daß sich in dieser Nachtrocknung die Verfahrensprinzipien einer Wirbelschichttrocknung der Sprühtrocknung aus der ersten Verfahrensstufe anschließen. Die Stufe dieser nachgeschalteten Wirbelschichttrocknung kann ihrerseits mit beliebigen Trocknungsgasen betrieben werden. In der bevorzugten Ausführungsform der Erfindung wird auch hier überhitzter Wasserdampf als Heißgas eingesetzt. Durch den intensiven Temperaturaustausch zwischen den jetzt vergleichsweise dicht gepackten Feststoffteilchen kann damit aber der unerwünschten Überhitzung des zu trocknenden Gutes und insbesondere der Gefahr der Überhitzung des Feinkornanteiles dieses Gutes wirkungsvoll gegengesteuert werden. In bevorzugten Ausführungsformen der Erfindung können auch in diesem Falle durch Zusammensetzung des zu trocknenden Gutes die Elemente der zuvor diskutierten "Inneren Trocknung" zur Abbindung noch verbliebener Restfeuchte mitverwendet werden.

Für den Einsatz im erfindungsgemäßen Verfahren eignen sich insbesondere wäßrige Zubereitungen solcher Wertstoffe bzw. Wertstoffkombinationen aus dem Gebiet der Netz- , Wasch- und/oder Reinigungsmittel, die durch kurzfristige Einwirkung von Wasser bzw. Wasserdampf im Temperaturbereich von 100 bis 110°C nicht oder nicht wesentlich geschädigt werden. Geeignet sind insbesondere als Wertstoffbestandteile Komponenten dieser Art, die unter den Arbeitsbedingungen den angegebenen Temperaturbereich Wenigstens für einen Zeitraum von etwa 0,5 - 1 min. schadlos überstehen. Für die vergleichsweise breite Anwendbarkeit des erfindungsgemäßen Verfahrens sind dabei die nachfolgenden Hilfserwägungen wesentlich: Zwar steigt beim Einsatz des überhitzten Wasserdampfes die Temperatur des zu trocknenden wäßrigen Einsatzgutes praktisch sofort auf die Siedetemperatur des Wassers an - beim Arbeiten unter Normaldruck also auf den Bereich von etwa 100°C - dieser Temperaturbereich wird dann aber im Trocknungsverlauf für einen sehr beträchtlichen Zeitraum beibehalten. Auch in komplexen und während des Trocknungsprozesses hautbildenden Stoffmischungen` wie sie beispielsweise bei tensidhaltigen Stoffgemischen vorliegen, hat diese Gesetzmäßigkeit Gültigkeit. Das gilt gleichermaßen für vergleichsweise niedrige wie hohe oder auch sehr hohe Temperaturen des überhitzten Wasserdampfs. Arbeitstemperaturen von etwa 100 - 110°C in wäßrigem Medium sind an sich wegen der Gefahr der Auslösung unerwünschter Reaktionen an zahlreichen Wertstoffen des hier betroffenen Sachgebiets nicht mehr geeignet. Entscheidend ist jedoch, daß der Zeitraum dieser Temperatureinwirkung im erfindungsgemäßen Verfahrenstyps so kurz gehalten werden kann, daß unter den gewählten Arbeitsbedingungen substantielle Schädigungen des zu trocknenden Gutes noch nicht auftreten müssen. So können beispielsweise auch an sich hydrolysegefährdete Tensidverbindungen unter diesen Arbeitsbedingungen Verweilzeiträume von einigen Minuten weitgehend unbeschadet überstehen, wenn bestimmte, dem einschlägigen Fachmann bekannte Rahmenbedingungen eingehalten werden. So wird es möglich, daß man im erfindungsgemäßen Trocknungsverfahren wäßrige Zubereitungen wasserlöslicher und/oder unlöslicher organischer und/oder anorganischer Wertstoffe aus Netz-, Wasch- und/oder Reinigungsmitteln der Trocknung unterwirft, die beispielsweise den nachfolgenden Stoffklassen zuzuordnen sind: Komponenten mit Tensid- bzw. Emulgatorwirkung, anorganische und/oder organische Gerüstsubstanzen oder Builder-Komponenten, Waschalkalien, Stellmittel bzw. Neutralsalze, Textilweichmacher, Bleichaktivatoren, Hilfsstoffe zur Verbesserung des Schmutztragevermögens der Flotten wie Vergrauungsinhibitoren oder auch Abrasivstoffe.

Verlangt die Temperaturempfindlichkeit des zu trocknenden Wertstoffs bzw. Wertstoffgemisches die Beibehaltung nicht unbeträchtlicher Wassermengen im Produkt der Haupttrocknung und damit gegebenenfalls die Bindung dieses Restwassers zur Sicherung der lagerbeständigen Schütt- bzw. Rieselfähigkeit des Trockengutes, so werden erfindungsgemäß Hilfsstoffe eingesetzt, die bevorzugt als partikulärer Festkörper zur Wasserfixierung befähigt sind. Eine solche Fixierung von Restwasser kann beispielsweise über dessen Einbindung als Kristallwasser erfolgen. Ebenso ist aber auch eine rein absorptive Bindung begrenzter Wassermengen in Feststoffteilchen der hier betroffenen Art möglich, ohne daß dadurch eine unerwünschte Klebrigkeit bzw. Haftung der Teilchen gegeneinander ausgelöst werden muß. Die Hilfsstoffe werden dabei in wenigstens so hinreichender Menge eingesetzt, daß trotz der im Gut verbliebenen Restfeuchte die Sicherstellung der Schütt- und Lagerbeständigkeit gewährleistet ist.

Die das Restwasser bindenden Hilfsstoffe können in einer Ausführungsform der Erfindung dem getrockneten Frischgut zweckmäßigerweise unmittelbar nach dessen Ausschleusung aus dem Verfahren zugesetzt und damit intensiv vermischt werden. In bevorzugten Ausführungsformen werden die Restwasser bindenden Hilfsstoffe allerdings wenigstens anteilsweise, vorzugsweise wenigstens überwiegend oder in der Regel in ihrer Gesamtmenge schon den wäßrigen Wertstoffzubereitungen vor ihrer Sprühtrocknung zugemischt. Möglich ist diese zuletzt genannte Ausführungsform immer dann, wenn die jeweilige Temperatursensitivität des zu trocknenden Gutes eine so weitgehende Trocknung zuläßt, daß die verbleibende Restfeuchte in hinreichendem Ausmaß durch solche mitverwendeten Hilfsstoffe aufgenommen und abgebunden werden kann.

In einer in diesem Zusammenhang bevorzugten Ausführungsform des erfindungsgemäßen Verfahrens werden als Restwasser bindende Hilfsstoffe entsprechende Wertstoffe aus dem Bereich der Netz-, Wasch- und/oder Reinigungsmittel eingesetzt, die ihrerseits hinreichend Temperaturunempfindlich sind. Typische Beispiele hierfür sind kristallwasserbindende anorganische Wertstoffe aus den Klassen der Builder-Komponenten, der Waschalkalien und/oder der sogenannten Stellmittel. Typische Beispiele der hier aufgezählten Wertstoff-Unterklassen sind kristallwasserbindende Silikatverbindungen insbesondere aus der Klasse der Zeolithe. Ein für Textilwaschmittel besonders charakteristisches Beispiel ist hier heute der Zeolith-NaA in Waschmittelqualität und einem Calciumbindevermögen im Bereich von 100 - 200 mg CaO/g - vergleiche hierzu die Angaben der DE 24 12 837. Typische Beispiele für kristallwasserbindende Waschalkalien sind Soda oder Natriumbicarbonat, während als Neutralsalz bzw. Stellmittel dem Natriumsulfat eine ausgeprägte Fähigkeit zur Bindung von beträchtlichen Mengen an Kristallwasser zukommt. Neben oder anstelle solcher Hilfsstoffe mit der Fähigkeit zur Kristallwasserbindung kann aber das Restwasser auch durch Hilfsmittel bzw. entsprechende Wertstoffe mit der Fähigkeit zur absorptiven Wasserbindung eingesetzt werden. So ist es bekannt, daß bekannte Vergrauungsinhibitoren auf Stärke- bzw. Zellulosebasis, textilweichmachende Hilfsmittel insbesondere auf Basis anorganischer, quellfähiger Silikate aber auch eine Reihe von unter Normalbedingungen festen organischen Tensidverbindungen in der Lage sind, nicht unbeträchtliche Wassermengen aufzunehmen ohne mit einer unerwünschten Oberflächenklebrigkeit darauf zu reagieren.

Je nach der Temperaturempfindlichkeit der eingesetzten Wertstoffe bzw. Wertstoffgemische einerseits und der Natur und der Menge der gegebenenfalls mitverwendeten Hilfsstoffe andererseits können beträchtliche Restwassergehalte im feinteilig aufgetrockneten Gut zurückbleiben ohne dessen lagerbeständige Schütt- und Rieselfähigkeit zu gefährden. Erfindungsgemäß ist dementsprechend vorgesehen die Trocknung mit überhitztem Wasserdampf bei Restwassergehalten des aus der Sprühzone entnommenen Gutes im Bereich von etwa 1 - 20 Gew.-% abzubrechen, wobei Restwassergehalte im Bereich von etwa 5 - 15 Gew.-% bevorzugt sein können. Die hier angegebenen Gew.-%-Bereiche beziehen sich dabei jeweils auf das Gewicht des aus der Wasserdampfzone entnommenen feinteiligen Gutes. Erfindungsgemäß ist es allerdings weiterhin bevorzugt, den Anteil dieses Restwassers, der nicht als Kristallwasser gebunden ist, einzugrenzen. So kann es zweckmäßig sein, diesen Wasseranteil auf höchstens etwa 10 Gew.-% vorzugsweise auf nicht mehr als etwa 5 - 7 Gew.-% und zweckmäßigerweise auf werte von höchstens etwa 3 - 4 Gew.-% einzugrenzen. Auch hier gilt zur Gew.-%-Angabe das zuvor Gesagte. Unter Berücksichtigung des Fachwissens aus dem hier angesprochenen Sachgebiet gelingt schon damit zuverlässig auch und gerade unter Einsatz des überhitzten Wasserdampfes bei hohen Arbeitstemperaturen die Kombination der angestrebten Eigenschaften: Temperaturschonende hinreichende Auftrocknung, Abbruch der Trocknungsreaktion auch wenn noch beträchtliche Restwassergehalte im Gut vorliegen, um damit unerwünschte Temperatureinwirkungen auszuschließen, und gleichwohl Sicherstellung der lagerbeständigen Schütt- und Rieselfähigkeit im Sinne der Praxisanforderungen.

Wie bereits angegeben sieht das erfindungsgemäße Verfahren für die Stufe der Einstellung der jeweils gewünschten Restfeuchte zusätzliche Arbeitsmöglichkeiten vor, die neben oder anstelle des zuvor geschilderten Prinzips der Inneren Trocknung zum Einsatz kommen können. Diesen alternativen Arbeitsmöglichkeiten sehen die Homogenisierung und/oder die stufenweise Absenkung des Feuchtigkeitsgehaltes im zu trocknenden Gut vor, wobei sich an die Stufe der Sprühtrocknung eine oder mehrere Nachtrocknungsstufen anschließen, die unter vergleichsweise gemäßigten Arbeitsbedingungen noch störende Feuchtigkeitsansteile austragen. Grundsätzlich sind hier alle dem Fachmann bekannten Nachtrocknungen im direkten oder indirekten Kontakt mit Heißgasen geeignet. Die bevorzugte Alternative des erfindungsgemäßen Verfahrens sieht auch für eine solche Nachtrocknung in zweckmäßiger Weise einer zusätzlichen Arbeitsstufe den Einsatz von überhitztem Wasserdampf vor. Zur Minderung der Gefährdung des temperatur-sensitiven Gutes kann die Einsatztemperatur des überhitzten Wasserdampfes niedriger liegen als in der Stufe der Sprühtrocknung. Besonders bewährt hat sich jedoch die nachfolgende Alternative: Das einen noch zu hohen Anteil an Restfeuchte aufweisende feinteilige Gut wird der Sprühtrocknungszone entnommen und in eine nachfolgende Wirbelschichttrocknung übergeführt. Dabei kann eine partielle Agglomerierung des noch hinreichend feuchten Gutes aus der Sprühtrocknungszone zu einem gröberem Agglomerat durchaus hingenommen werden oder sogar im Rahmen einer bevorzugten Ausführungsform im Sinne des erfindungsgemäßen Handelns liegen. Ein solcher partieller Agglomierungsschritt kann insbesondere dazu dienen, den Feinanteil des der Sprühtrocknungszone entnommenen Gutes zu binden und dabei beispielsweise mit dem noch feuchteren Grobkorn dieses primären Trocknungsproduktes zu vereinigen. In der jetzt anschließenden Wirbelschichttrocknung wird in an sich bekannter Weise mit den stark erhöhten Feststoffdichen im Trocknungsraum gearbeitet, die zum intensiven Temperaturaustausch zwischen allen Feststoffteilchen der Wirbelschicht führen und damit unerwünschte Temperatursteigerungen in einem Anteil des zu trocknenden körnigen Gutes selbst dann verhindern, wenn auch hier mit Wasserdampf als Trocknungsgas gearbeitet wird, der auf vergleichsweise hohe Temperaturen überhitzt worden ist.

In einer solchen Nachtrocknungsstufe im Wirbelbett bedarf es in der Regel nur noch der Entfernung begrenzter Mengen der Restfeuchte um die lagerbeständige Rieselfähigkeit des körnigen Gutes sicherzustellen, so daß auch die Verweilzeit des Gutes in dieser Wirbelschichtnachbehandlung kurz gehalten werden kann und beispielsweise nur einige Minuten beträgt. Die Haupttrocknung in der Sprühzone und die Nachtrocknung in der Wirbelschicht können im Verbund eines kontinuierlichen Verfahrens oder aber auch als getrennte Verfahrensstufen unabhängig voneinander gefahren werden. Im einzelnen gilt hier das allgemeine Fachwissen.

In einer solchen nachgeschalteten zweiten Trocknungsstufe kann die noch vorliegende Restfeuchte anteilsweise oder praktisch vollständig ausgetragen werden. In praktischen Ausführungsformen wird bei Einsatz einer solchen Verfahrensmodifikation die Restfeuchte des der Sprühzone entnommenen Gutes zu wenigstens etwa 10 - 70 %, vorzugsweise etwa 20 - 50 % entnommen - % bezogen auf die Restfeuchte, Letztlich im Gut verbleibende Feuchte wird über die Innere Trocknung unschädlich gemacht.

In einer wichtigen Ausführungsform wird das erfindungsgemäße Verfahren zur Trocknung von Wertstoffabmischungen für den Aufbau von Textilwaschmitteln eingesetzt. Die zu trocknenden wäßrigen Einsatzmaterialien enthalten dabei vorzugsweise waschaktive Tenside zusammen mit Gerüst- bzw. Builder-Substanzen, sowie gewünschtenfalls Waschalkalien und/oder Neutralsalze. Bevorzugt ist hier wenigstens ein Anteil der jeweils eingesetzten Mehrstoffmischungen zur Bindung und/oder Fixierung von Restwasser insbesondere in Form von Kristallwasser befähigt. Ebenso wie im Sprühtrocknungsverfahren von Textilwaschmitteln wird bei solchen Stoffmischungen in aller Regel nicht das Textilwaschmittel in seiner Gesamtheit der Sprühtrocknung ausgesetzt. Hier steht die extreme Temperaturempfindlichkeit peroxidenthaltender Bleichkomponenten wie Perborat-Monohydrat beziehungsweise -Tetrahydrat bzw. entsprechender anderer besonders temperatursensitiver Komponenten entgegen. Als weitere Beispiele seien genannt Enzyme, Duftstoffe, gegebenenfalls auch Bleichaktivatoren und andere Kleinkomponenten. Auch die Lehre der Erfindung sieht dementsprechend unter anderem die Herstellung sogenannter Mehrkomponenten-Turmpulver vor, die einen Großteil der das Fertigwaschmittel ausmachenden Komponenten in Mischung vereinigt enthalten, nachträglich aber noch mit flüssigen und/oder festen weiteren Wirkstoffkomponenten beaufschlagt bzw. vermischt werden. Bekannte Beispiele für solche Flüssigkomponenten sind insbesondere leichtflüchtige niotensidische Komponenten, die im erfindungsgemäßen Verfahren zwar nicht mehr über das Abgas in die Umwelt entlassen werden, deren Zugabe zum Gesamtwaschmittel gleichwohl durch nachträgliches Aufdüsen auf ein erfindungsgemäß vorbereitetes saugfähiges Turmpulver einfach ausgestaltet werden kann.

Die Arbeitsbedingungen des erfindungsgemäßen Verfahrens ermöglichen den Einsatz hoher Temperaturen der im Kreislauf geführten Wasserdampfphase im Bereich des Trocknungsschrittes der Sprühtrocknung. Dabei liegen die Arbeitstemperaturen oberhalb 150°C und vorzugsweise bei wenigstens etwa 200°C in der Gasphase. Dabei können Arbeitstemperaturen von 250°C und darüber besonders interessant sein, wobei insbesondere auch der Temperaturbereich von wenigstens 300°C, insbesondere 300 - 380°C in Betracht kommt. Für viele Fälle sind Arbeitstemperaturen im Bereich von etwa 270 - 350°C in der Wasserdampfphase besonders geeignet, dabei beziehen sich diese Temperaturangaben jeweils auf die Temperatur des der Sprühzone im Gleich- oder Gegenstrom zugeführten auf Optimal-Temperatur aufgeheizten Wasserdampfstromes. In an sich bekannter Weise sinkt im Verlaufe des Verweilens mit dem nassen bzw. feuchten Gut die Temperatur des Wasserdampfes. Weitgehend energetische Überlegungen - insbesondere auch zu der beabsichtigten Weiterverwendung des auszukreisenden Dampfteilstromes - bestimmen die Mengenverhältnisse zwischen der zu verdampfenden flüssigen Wassermenge und der zugeführten Menge des überhitzten Wasserdampfes. Möglich sind hier Ausführungsformen, die nur eine beschränkte Absenkung der Dampftemperatur nach Verlassen der Sprühzone beispielsweise auf Werte im Bereich von etwa 190 - 250°C beinhalten, während in anderen Ausführungsformen eine weiterführende Ausnutzung der thermischen Energie des Wasserdampfes bis zu einer Absenkung der Dampftemperatur in die Nähe der Kondensationstemperatur unter Verfahrensbedingungen zweckmäßig bzw. vorteilhaft sein kann. Im einzelnen werden diese Detailfragen durch die Ausgestaltung des Kreislaufverfahrens in seiner Gesamtheit mitbestimmt, Entsprechende Überlegungen gelten für den Einsatz von überhitztem Wasserdampf als Heißgas in einer gegebenenfalls vorgesehenen Nachtrocknungsstufe im Wirbelschichtverfahren. Auch die zuvor angegebenen Zahlenwerte gelten hier sinngemäß.

Grundsätzlich gilt für diese Überlegungen, daß im geschlossenen System mit einem Wasserdampfkreislaufstrom gearbeitet wird, dem der verdampfte Wasseranteil des Einsatzgutes entzogen wird, während der insbesondere im Trocknungsschritt abgegebene Energiebetrag dem Kreislaufstrom wieder zugeführt wird. Der abgezogene Wasserdampfteilstrom wird nach der Reinigung von mitgetragenen Gutanteilen in einer wichtigen Ausführungsform als Brauchdampf anderweitiger Verwendung zugeführt, nachdem gewünschtenfalls zunächst Druck und Temperatur dieses Dampfteilstromes den dort geforderten Bedingungen angeglichen worden sind. Das erfindungsgemäße Verfahren sieht jedoch dabei vor, wenigstens einen Anteil dieses abgezogenen Dampfteilstromes zu kondensieren, um damit eine Naßwäsche des abgezogenen Dampfteilstromes und dessen Reinigung von mitgetragenen Gutanteilen zu bewirken. Die dabei anfallende wäßrige Flüssigphase wird zusammen mit den darin vorliegenden ausgekreisten Wertstoffanteilen in das Trocknungsverfahren zurückgeführt. In diesem Zusammenhang ist es beispielsweise möglich, dampfförmige Anteile des ausgekreisten Gasstromes zur Aufkonzentrierung einer solchen Waschflüssigphase einzusetzen. Die zurückgeführten Flüssiganteile mit Wertstoffgehalten können unmittelbar der Sprühzone zugeführt oder zunächst mit den wäßrigen Frischzubereitungen vermischt und in dieser Form zur Trocknung in die Sprühzone eingegeben werden.

Im Nachfolgenden finden sich allgemeine Angaben von Wertstoffen für die unmittelbare oder mittelbare Verwendung bei der Herstellung von Netz-, Wasch- und/oder Reinigungsmitteln unter Einsatz der erfindungsgemäßen Arbeitsprinzipien, wobei diese Zusammenstellung an heute üblichen Komponenten von Textilwaschmitteln dargestellt ist.

Als anionische Tenside sind zum Beispiel Seifen aus natürlichen oder synthetischen, vorzugsweise gesättigten Fettsäuren brauchbar. Geeignet sind insbesondere aus natürlichen Fettsäuren zum Beispiel Kokos-, Palmkern- oder Talgfettsäuren abgeleitete Seifengemische. Bevorzugt sind solche, die zu 50 - 100 % aus gesättigten C₁₂₋₁₈-Fettsäureseifen und zu 0 - 50 % aus Ölsäureseife zusammemgesetzt sind.

Weiterhin geeignete synthetische anionische Tenside sind solche vom Typ der Sulfonate und Sulfate. Besondere Bedeutung kann dabei das erfindungsgemäße Verfahren für entsprechende Verbindungen pflanzlichen und/oder tierischen Ursprungs haben.

Als Tenside vom Sulfonattyp kommen Alkylbenzolsulfonate (C₉₋₁₅-Alkyl), Olefinsulfonate, d.h. Gemische aus Alken- und Hydroxyalkansulfonaten sowie Sulfonate in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch die Alkansulfonate, die aus C₁₂₋₁₈-Alkanen durch Sulfochlorierung oder Sulfoxidation und anschließende Hydrolyse beziehungsweise Neutralisation beziehungsweise durch Bisulfitaddition an Olefine erhältlich sind, sowie insbesondere die Ester von Alpha-Sulfofettsäuren (Estersulfonate), zum Beispiel die Alpha-sulfonierten Methylester der hydrierten Kokos-, Palmkern- oder Talgfettsäuren.

Wichtige Tensid- beziehungsweise Emulgatorkomponenten sind in diesem Zusammenhang auch die sogenannten Di-salze, die sich durch Verseifung der zuvor genannten Alpha-sulfonierten Fettsäure-Methylester beziehungsweise durch unmittelbare Sulfonierung von insbesondere gesättigten Fettsäuren - insbesondere C₁₂₋₁₈-Fettsäuren - herstellen lassen. Das erfindungsgemäße Verfahren schafft damit erstmalig die Möglichkeit großtechnisch problemfrei Tenside der hier und im nachfolgenden beschriebenen Art auf Naturstoffbasis in trockener rieselfähiger Konzentratform zur Verfügung zu stellen, die praktisch unbegrenzte Lagerbeständigkeit beinhaltet und damit einen wesentlichen Beitrag zum weltweit angestrebten ABS-Austausch leisten können.

Geeignete Tenside vom Sulfattyp sind die Schwefelsäuremonoester aus primären Alkoholen natürlichen und synthetischen Ursprungs, das heißt aus Fettalkoholen, zum Beispiel Kokosfettalkoholen, Talgfettalkoholen, Oleylalkohol, Lauryl-, Myristyl-, Palmityl- oder Stearylalkohol, oder den C₁₀₋₂₀-Oxoalkoholen, und diejenigen sekundärer Alkohole dieser Kettenlänge. Auch die Schwefelsäuremonoester der mit insbesondere 1 bis 6 Mol Ethylenoxid ethoxylierten Alkohole natürlichen und/oder synthetischen Ursprungs sind geeignete Komponenten. Als Beispiel für Synthese-Alkohole seien Verbindungen wie 2-Methyl-verzweigte C₉₋₁₁-Alkohole mit im Durchschnitt 3,5 Mol Ethylenoxid genannt. Ferner eignen sich sulfatierte Fettsäuremonoglyceride.

Die anionischen Tenside können in Form ihrer Natrium-, Kaum- und Ammoniumsalze sowie als lösliche Salze organischer Basen vorliegen.

Als nichtionische Tenside sind Anlagerungsprodukte von 1 bis 40, vorzugsweise 2 bis 20 Mol Ethylenoxid an 1 Mol einer aliphatischen Verbindung mit im wesentlichen 10 bis 20 Kohlenstoffatomen aus der Gruppe der Alkohole, Carbonsäuren, Fettamine, Carbonsäureamide oder Alkansulfonamide verwendbar. Besonders wichtig sind die Anlagerungsprodukte von 8 bis 20 Mol Ethylenoxid an primäre Alkohole, wie zum Beispiel an Kokos- oder Talgfettalkohole, an Oleylalkohol, an Oxoalkohole, oder an sekundäre Alkohole mit 8 bis 18, vorzugsweise 12 bis 18 C-Atomen. Neben den wasserlöslichen Nonionics sind aber auch nicht beziehungsweise nicht vollständig wasserlösliche Polyglykolether mit 2 bis 7 Ethylenglykolether-Resten im Molekül von Interesse, insbesondere wenn sie zusammen mit wasserlöslichen, nichtionischen oder anionischen Tensiden eingesetzt werden. Es ist bereits zuvor darauf hingewiesen worden, daß auch im erfindungsgemäßen Verfahren der Verschleppungstendenz solcher nichtionischen Tenside dadurch Rechnung getragen werden kann, daß Komponenten dieser Art ganz oder teilweise nach Abschluß der Sprühtrocknung auf ein entsprechend vorgebildetes Turmpulver aufgetragen werden. Insbesondere kann das auch Gültigkeit für bei Raumtemperatur flüssige Niotenside haben.

Außerdem können als nichtionische Tenside auch Alkyglykoside der allgemeinen Formel R-O-(G)ₓ eingesetzt werden, in der R einen primären geradkettigen oder verzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt.

Als organische und anorganische Gerüst- beziehungsweise Builder-Substanzen eignen sich schwach sauer, neutral oder alkalisch reagierende lösliche und/oder unlösliche Komponenten, die Calciumionen auszufällen oder komplex zu binden vermögen. Geeignete und insbesondere ökologisch unbedenkliche Builder-Substanzen sind feinkristalline synthetische Zeolithe der bereits geschilderten Art. Als weitere Builder-Bestandteile, die insbesondere zusammen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1.000 und 100.000, das der Copolymeren zwischen 2.000 und 200.000, vorzugsweise 50.000 bis 120.000, bezogen auf freie Säure. Ein besonders bevorzugtes Acrylsäure-MaIeinsäure-CopoIymer weist ein Molekulargewicht von 50.000 bis 100.000 auf. Geeignete, wenn auch weniger bevorzugte Verbindungen dieser Klasse sind Copolymere der Acrylsäure oder Methacrylsäure mit Vinylethern, wie Vinylmethylether, in denen der Anteil der Säure mindestens 50 % beträgt. Brauchbar sind ferner Polyacetalcarbonsäuren, wie sie beispielsweise in den US-Patentschriften 4,144,226 und 4,146,495 beschrieben sind sowie polymere Säuren, die durch Polymerisation von Acrolein und anschließende Disproportionierung mittels Alkalien erhalten werden und aus Acrylsäureeinheiten und Vinylalkoholeinheiten beziehungsweise Acroleineinheiten aufgebaut sind.

Brauchbare organische Gerüstsubstanzen sind beispielsweise die bevorzugt in Form ihrer Natriumsalze eingesetzten Polycarbonsäuren, wie Citronensäure und Nitrilotriacetat (NTA), sofern ein derartiger Einsatz aus ökologischen Gründen nicht zu beanstanden ist.

In Fällen, in denen ein Phosphat-Gehalt toleriert wird, können auch Phosphate mitverwendet werden, insbesondere Pentanatriumtriphosphat, gegebenenfalls auch Pyrophosphate sowie Orthophosphate, die in erster Linie als Fällungsmittel für Kalksalze wirken,

Geeignete anorganische, nicht komplexbildende Salze sind die - auch als "Waschalkalien" bezeichneten - Bicarbonate, Carbonate, Borate oder Silikate der Alkalien; von den Alkalisilikaten sind vor allem die Natriumsilikate mit einem Verhältnis Na₂O : SiO₂ wie 1 : 1 bis 1 : 3.5 brauchbar. Aus den restlichen Gruppen üblicher Waschmittelbestandteile kommen zur Mitverwendung im erfindungsgemäßen Sprühtrocknungsverfahren insbesondere Komponenten aus den Klassen der Vergrauungsinhibitoren (Schmutzträger), der Neutralsalze und der textilweichmachenden Hilfsmittel In Betracht.

Geeignete Vergrauungsinhibitoren sind beispielsweise Carboxymethylcellulose, Methylcellulose, Methylhydroxyethylcellulose und deren Gemische. Ein typisches Beispiel für einen geeigneten Vertreter der Neutralsalze ist das bereits erwähnte Natriumsulfat zu nennen. Geeignete Weichmacher sind beispielsweise quellfähige Schichtsilikate von der Art entsprechender Montmorilonite, beispielsweise Bentonit.

Hochtemperatur-sensitive übliche Mischungsbestandteile von Wasch- und Reinigungsmitteln, wie Bleichmittel auf Basis von Per-Verbindungen, Enzyme aus der Klasse Proteasen, Lipasen und Amylasen beziehungsweise Bakterienstämme oder Pilze, Stabilisatoren, Parfüme, temperaturempfindliche Farbstoffe und dergleichen, werden wie bereits angegeben zweckmäßigerweise mit den zuvor gewonnenen Trockenpulvern vermischt.

### Beispiele

### Beispiel 1

Der Versuch wird in einem Technikumssprühturm der Firma Niro-Atomizer durchgeführt. Es wird ein Waschmittel-Slurry mit einem Wassergehalt von 45 % eingesetzt, dessen Feststoffphase einen Tensidgehalt (Anion- und Niotenside) von ca. 16 Gew.-% und einen Sodanteil (<berechnet als Wasserfreie Soda) von ca. 24 Gew.-%, sowie zum Rest Zeolith NaA, Wasserglas. Acrylsäure-Copolymer (Handelsprodukt Sokalan (R), Fettsäureseife als Natriumsalz sowie übliche Kleinkomponenten, enthielt.

Der in den Turm geführte Slurry hatte eine Temperatur von 70°C und wurde bei einer Drehzahl des Zerstäubers von 25.000 Upm zerstäubt. Die Turmeintrittstemperatur des überhitzten Wasserdampfes betrug 190°C, die Austrittstemperatur 120°C bei einem Dampfmassenstrom von 160 kg/h. Das sprühgetrocknete Produkt läßt sich wie folgt charakterisieren - in Klammern sind jeweils wieder die Daten eines vergleichbaren, jedoch mit Heißluft getrockneten Produktes (Zulufttemperatur 160°C, Austrittstemperatur 75°C) angegeben:

| | |
|---|---|
| größer als 1,6 mm | 0,4 (2,2) |
| größer als 0,8 mm | 8,6 (17,1) |
| größer als 0,4 mm | 14,3 (26,7) |
| größer als 0,2 mm | 20,0 (33,2) |
| größer als 0,1 mm | 49,1 (17,9) |
| größer als 0,01 mm | 7,6 (2,8) |

Das Schüttgewicht des Trockenproduktes beträgt 680 g/l (603 g/l). Der Wassergehalt - im Standardverfahren wie in Beispiel 1 angegebenen bestimmt - beträgt 15,6 % (11.5%).

### Beispiel 2

In dem Technikumssprühturm der Firma Niro-Atomizer wurde eine wäßrige Fettalkohol-sulfatpaste (Handelsprodukt "Sulfopon T55" der Anmelderin) mit einem Wassergehalt von ca. 41-Gew.%, vermischt mit 5-Gew.% Soda, unter den in Beispiel 1 gegebenen Bedingungen verdüst. Bei einer Wasserverdampfung von ca. 1 kg/h konnte ein Durchsatz von ca. 2,4 kg/h Sulfopon T55 erreicht werden. Im Gleichstrom wurde dabei mit 140 kg/h überhitztem Wasserdampf (Eintrittstemperatur 250°C, Austrittstemperatur 130°C) getrocknet. Das Produkt ist wie folgt charakterisiert - in Klammern sind wieder die entsprechenden Zahlenwerte für die Trocknung mit Luft (Turmeintrittstemperatur 210°C, Turmaustrittstemperatur 130°C) angegeben:

| | |
|---|---|
| größer als 1,6 mm | - (-) |
| größer als 0,8 mm | - (0,5) |
| größer als 0,4 mm | 40,8 (62,7) |
| größer als 0,2 mm | 35,7 (31,7) |
| größer als 0,1 mm | 22,5 (1,6) |
| größer als 0,01 mm | 1,0 (-) |

Das Schüttgewicht des Produktes beträgt 350 g/l (210 g/l), der Wassergehalt - bestimmt wie in Beispiel 1 - beträgt ca. 6 % (1,5 %).

### Beispiel 3

In dem Technikumssprühturm der Firma Niro-Atomizer werden mit Hilfe eines Rotationszerstäubers (Drehzahl 25 000 U/min) mehrere Wasch- bzw. Reinigungsmittelslurries versprüht. Die Trocknung erfogte jeweils in Vergleichsversuchen im Gleichstrom alternativ einmal mit Luft und einmal mit überhitztem Wasserdampf.

Dabei werden die nachfolgenden Produkte I bis IV - jeweils in Form eines wäßrigen Slurries - eingesetzt:
Produkt I (Textilwaschmittelrezeptur) enthaltend im Feststoffanteil circa 17 Gew.-% eines Gemisches aus anionischen und nichtionischen Tensiden, circa 12,5 Gew.-% Soda (berechnet als calcinierte Soda), circa 36 Gew,-% Natriumsulfat sowie zum Rest Zeolith NaA (Builderhauptkomponente), Acrylsäure-Copolymer (Co-Builder), Wasserglas und Kleinkomponenten.
Produkt II Reinigungsmittelgemisch (Fleckensalz) enthaltend circa 6 Gew.-% Aniontensid, circa 20 Gew.-% Wasserglas, circa 25 Gew.-% Natriumsulfat sowie zum Rest calcinierte Soda und Kleinkomponenten. Produkt III Textilwaschmittelgemisch enthaltend circa 15 Gew-% eines Gemisches aus anionischen und nichtionischen Tensiden, circa 12,5 Gew.-% calcinierte Soda, circa 30 Gew.-% Natriumsulfat sowie Zum Rest Builder- und Co-Builder-Komponenten, Wasserglas und Kleinkomponenten.
Produkt IV Textilwaschmittelgemisch enthaltend im Feststoffanteil circa 20 Gew.-% anionischer und nichtionischer Tensidverbindungen, circa 40 Gew.-% Hauptbuilder- und Co-Builder-Komponenten, etwa 20 Gew.-% calcinierte Soda sowie Zum Rest Wasserglas und sonstige Kleinkomponenten.

Die Arbeitsbedingungen und die erhaltenen Produkte für die jeweils vergleichenden Versuche der Trocknung - einmal mit Luft in konventionellen Verfahren und zum anderen mit Wasserdampf im Sinne des erfindungsgemäßen Verfahrens - sind in der nachstehenden Tabelle Zusammengefaßt. Allgemein kann das Folgende gesagt werden:
Die Dichte des mit Dampf getrockneten Pulvers ist generell höher als bei der entsprechenden Trocknung mit Luft. Der Dichteunterschied beträgt je nach eingesetztem Slurry zwischen 5,5 und 23 %. Für die Verdampfung des im Slurry enthaltenen Wassers wurden zwischen 25 % und 50 % der mit dem überhitzten Dampf zugeführten Energie aufgewendet. Der Gehalt an Trockensubstanz in Gew.-% wird in der Tabelle mit TS abgekürzt. Die erzielte Restfeuchte des Pulvers - bestimmt mit den Infrarottrocknungsgerät Satorius MA 30 - beträgt in allen Fällen weniger als 10 Gew.-%.

**Tabelle**

| Versuch Nr. | T_{Gas} ein/aus °C | Slurrymenge l/h | Dampfmenge m³/h | TS Slurry % | TS Pulver % | Schüttdichte g/l |
|---|---|---|---|---|---|---|
| I/Luft | 160/110 | 3,2 | | 58,0 | 96,7 | 294 |
| I/Dampf | 175/125 | 3,2 | 170 | 58,0 | 92,4 | 310 |
| | | | | | | |
| II/Luft | 220/180 | 3,2 | | 68,0 | 98,8 | 622 |
| II/Dampf | 220/150 | 3,2 | 190 | 68,0 | 97,6 | 685 |
| | | | | | | |
| III/Luft | 235/220 | 4,5 | | 56,0 | 97,6 | 247 |
| III/Dampf | 235/150 | 4,5 | 195 | 56,0 | 94,4 | 323 |
| | | | | | | |
| IV/Luft | 253/210 | 4,5 | | 63,0 | 97,5 | 271 |
| IV/Dampf | 257/170 | 4,5 | 200 | 63,0 | 93,3 | 287 |
| Slurrydichte: ca. 1,5 kg/l | | | | | | |

## Patentansprüche

1. Verfahren zur Gewinnung feinteiliger, fester, schütt- bzw. rieselfähiger Wertstoffe oder Wertstoffgemische, die als Netz-, Wasch- und/oder Reinigungsmittel und/oder zur Verwendung in solchen Mitteln geeignet sind, aus ihren wäßrigen Zubereitungen durch Sprühtrocknung in einem überhitzten Wasserdampf enthaltenden Heißgasstrom im Bereich des Normaldrucks, wobei im geschlossenen System mit einem Wasserdampfkreislaufstrom gearbeitet wird, dem der verdampfte Wasseranteil des Einsatzgutes entzogen und der insbesondere im Trocknungsschritt abgegebene Energiebetrag wieder zugeführt wird,
dadurch gekennzeichnet,
daß mit überhitztem, auf Einsatztemperaturen oberhalb 150°C und bevorzugt von wenigstens 200°C aufgeheiztem Wasserdampf als Heißgasstrom gearbeitet wird, daß weiterhin dabei die Trocknung des partikulären Gutes vor dessen Gefährdung durch thermische Einwirkung abgebrochen wird, wobei die lagerbeständige Schütt- bzw. Rieselfähigkeit des derart partiell aufgetrockneten Gutes durch Zusatz solcher Mischungsbestandteile sichergestellt wird, die zur Bindung begrenzter Wassermengen befähigt sind, und/oder eine Nachbehandlung zur Homogenisierung des Restfeuchtegehalts im partikulären Gut und/oder dessen Nachtrocknung unter Wertstoff-schonenden Bedingungen angeschlossen wird, während wenigstens ein Anteil des aus dem Kreislauf abgezogenen Wasserdampf-Teilstromes kondensiert und in einer Naßwäsche zur Reinigung des abgezogenen Dampf-Teilstromes von mitgetragenen Gutanteilen verwendet und dann zusammen mit den darin vorliegenden, ausgekreisten Wertstoffanteilen in das Trocknungsverfahren zurückgeführt wird.

2. Verfahren nach Anspruch 1, dadurch gekennzeichnet, daß man wässrige Zubereitungen solcher Wertstoffe bzw. Wertstoffkombinationen einsetzt, die durch kurzfristige Einwirkung von Wasser bzw. Wasserdampf im Temperaturbereich von 100 bis 110°C nicht geschädigt werden und vorzugsweise diesen Temperaturbereich wenigstens für einen Zeitraum von 0,5 bis 1 min. in der eingesetzten Zubereitungsform schadlos überstehen.

3. Verfahren nach Ansprüchen 1 und 2, dadurch gekennzeichnet, daß man wässrige Zubereitungen wasserlöslicher und/oder unlöslicher organischer und/oder anorganischer Wertstoffe aus Netz-, Wasch- und/oder Reinigungsmitteln, wie Komponenten mit Tensid- bzw. Emulgator-Wirkung, anorganische und/oder organische Gerüstsubstanzen oder Builderkomponenten, Waschalkalien, Stellmittel bzw. Neutralsalze, Textilweichmacher, Bleichaktivatoren, Hilfsstoffe zur Verbesserung des Schmutztragevermögens wie Vergrauungsinhibitoren und Abrasivstoffe dem Verfahren unterwirft.

4. Verfahren nach Ansprüchen 1 bis 3, dadurch gekennzeichnet, daß man zur Bindung des Restwassers Hilfsstoffe einsetzt, die als partikulärer Festkörper zur Wasserfixierung - beispielsweise über dessen Einbindung als Kristallwasser oder durch absorptive Bindung - befängt sind und dabei in einer Ausführungsform in wenigstens so hinreichender Menge mitverwendet werden, daß die Schütt- und Lagerbeständigkeit des Trockengutes gewährleistet ist.

5. Verfahren nach Ansprüchen 1 bis 4, dadurch gekennzeichnet, daß die Restwasser bindenden Hilfsstoffe wenigstens anteilsweise, vorzugsweise wenigstens überwiegend schon den wäßrigen Wertstoffzubereitungen vor ihrer Sprühtrocknung zugemischt werden.

6. Verfahren nach Ansprüchen 1 bis 5, dadurch gekennzeichnet, daß als Restwasser bindende Hilfsstoffe entsprechende Wertstoffe aus dem Bereich der Netz-, Wasch- und/oder Reinigungsmittel, beispielsweise Kristallwasser bindende anorganische Wertstoffe aus den Klassen der Builderkomponenten, Waschalkalien und/oder Stellmittel bzw. organische Wertstoffe mit der Fähigkeit absorptiver Wasserbindung, eingesetzt werden.

7. Verfahren nach Ansprüchen 1 bis 6, dadurch gekennzeichnet, daß das noch Restwasser enthaltende Gut aus der Sprühtrocknung einer wenigstens 1-stufigen Nachbehandlung unterworfen wird, die zu einer Homogenisierung der Restfeuchte im primär anfallenden, der Sprühtrocknungszone entnommenen Gut führt und/oder in Form einer Nachtrocknung vorgenommen wird, wobei solche Nachbehandlungen bevorzugt in einer Wirbelschicht durchgeführt werden.

8. Verfahren nach Ansprüchen 1 bis 7, dadurch gekennzeichnet, daß auch eine Wirbelschicht-Nachtrocknung mit überhitztem Wasserdampf als Heißgasstrom vorgenommen wird, während die bloße Homogenisierung der Restfeuchte bevorzugt mit Umgebungsluft durchgeführt wird.

9. Verfahren nach Ansprüchen 1 bis 8, dadurch gekennzeichnet, daß man den Trocknungsschritt mit dem überhitzten Wasserdampf in der Sprühzone bei Restwassergehalten im Bereich von etwa 1 - 20 Gew.-%, vorzugsweise im Bereich von etwa 5 - 15 Gew.-% abbricht und dabei vorzugsweise den Gehalt an freiem, nicht als Kristallwasser gebundenen Wasser auf Werte von höchstens etwa 10 Gew.-% begrenzt - Gew.-% jeweils bezogen auf das Gewicht des aus der Sprüh-Zone entnommenen feinteiligen Gutes.

10. Verfahren nach Ansprüchen 1 bis 9, dadurch gekennzeichnet, daß als Wertstoffe ausgewählte Einzelkomponenten organischer oder anorganischer Natur, vorzugsweise aus den Klassen der Tenside bzw. Emulgatoren oder der Gerüstsubstanzen bzw. Builder, insbesondere aus dem Gebiet der Wertstoffe für Textilwaschmittel, als rieselfähiges Trockengut gewonnen werden, wobei auch deren Abmischungen mit wasserlöslichen und bevorzugt zur Kristallwasserbindung befähigten Salzen zur Absicherung der Rieselfähigkeit und Lagerbeständigkeit und/oder zur Einstellung des Schüttgewichtes dem Verfahren unterworfen werden können.

11. Verfahren nach Ansprüchen 1 bis 10, dadurch gekennzeichnet, daß Wertstoffabmischungen für den Aufbau von Textilwaschmitteln aufgetrocknet werden, die vorzugsweise. Tenside zusammen mit Gerüst- bzw. Buildersubstanzen und gewünschfenfals Waschalkalien und/oder Neutralsalzen enthalten, wobei weiterhin bevorzugt wenigstens ein Anteil der Mehrstoffmischungen zur Bindung und/oder Fixierung von Restwasser - insbesondere in Form von Kristallwasser - befähigt ist.

12. Verfahren nach Ansprüchen 1 bis 11, dadurch gekennzeichnet, daß in der Sprühtrocknung mit Wasserdampf einer Einsatztemperatur bei oder oberhalb 250°C und insbesondere mit Einsatztemperaturen von wenigstens etwa 300°C als Heißgasstrom gearbeitet wird, wobei auch in einer gegebenenfalls nachgeschalteten Wirbelschicht mit entsprechenden Temperaturen der Gasphase gearbeitet werden kann.

13. Verfahren nach Ansprüchen 1 bis 12, dadurch gekennzeichnet, daß in der Sprühzone im Gleich- oder Gegenstrom gearbeitet und das rieselfähige Trockengut ausgekreist wird.

14. Verfahren nach Ansprüchen 1 bis 13, dadurch gekennzeichnet, daß ausgekreiste und kondensierte Wasserdampf- bzw. Wasser-Anteile gegebenenfalls zusammen mit darin vorliegenden verschleppten Wertstoffanteilen den wäßrigen Zubereitungen zur Trocknung in der Sprühzone zugegeben werden.

15. Anwendung des Verfahrens nach Ansprüchen 1 bis 14 zur Gewinnung von rieselfähigen Tensid-Feststoffen, insbesonderen Aniontensiden auf Naturstoffbasis, die auch in Abmischung mit insbesondere löslichen anorganischen Salzen zur Absicherung der Rieselfähigkeit und/oder des Schüttgewichtes vorliegen können.

16. Anwendung des Verfahrens nach Ansprüchen 1 bis 14 zur Herstellung von getrockneten Wertstoffen auf Silikat-Basis, die insbesondere in Textilwaschmitteln Verwendung finden können und dabei entsprechende quellfähige und/oder nichtquellfähige Vertreter wie Schichtsilikate, z.B. Bentonite, und-oder Zeolith-Verbindungen, insbesondere Zeolith NaA in Waschmittelqualität, umfassen.

17. Anwendung des Verfahrens nach Ansprüchen 1 bis 14 zur Gewinnung von Textil-Waschmittel-Turmpulvern, denen temperatursensitive und/oder wasserdampfflüchtige Komponenten zum Aufbau der fertigen Textilwaschmittel zugesetzt werden können.

## Claims

1. A process for the production of fine-particle, solid, pourable and free-flowing useful materials or mixtures thereof, which are suitable as and/or for use in wetting agents, detergents and/or cleaning products, from water-containing preparations of such materials by spray-drying in a hot gas stream containing superheated steam under normal pressure, the process being carried out in a closed-loop system using recycle steam from which the evaporated water of the starting material is removed while the energy released, above all in the drying step, is returned to the recycle stream, characterized in that superheated steam heated to temperatures above 150°C and preferably of at least 200°C is used as the hot gas stream and drying of the particulate material is terminated before it is endangered by heat effects, the long-term pourability and free flow of the partly dried material being ensured by addition of mixture components which are capable of binding limited quantities of water and/or an aftertreatment for homogenizing the residual moisture content in the particulate material and/or for subsequent drying thereof being carried out under conditions which do not affect the useful material, while at least part of the steam removed from the circuit may be condensed and used in a wet wash to remove entrained material from the steam and then returned to the drying process together with the amounts of useful material removed from the circuit which are present therein.

2. A process as claimed in claim 1, characterized in that aqueous preparations of useful materials or combinations thereof, which are not damaged by brief exposure to water or steam at temperatures of 100 to 110°C and which preferably safely withstand temperatures in this range for at least 0.5 to 1 minute in the form used, are subjected to the process.

3. A process as claimed in claims 1 and 2, characterized in that aqueous preparations of water-soluble and/or insoluble, organic and/or inorganic useful materials from wetting agents, detergents and/or cleaning products, such as components having a surfactant or emulsifier effect, inorganic and/or organic builders or builder components, washing alkalis, fillers and neutral salts, fabric softeners, bleach activators, auxiliaries for improving soil suspending power, such as redeposition inhibitors, and abrasives are subjected to the process.

4. A process as claimed in claims 1 to 3, characterized in that auxiliaries which, as particulate solids, are capable of fixing water, for example by binding water in the form of water of crystallization or by absorptive binding and, in one embodiment, are used in quantities at least sufficient to guarantee the pourability and storability of the dry material are used for binding the residual water.

5. A process as claimed in claims 1 to 4, characterized in that the auxiliaries binding residual water are added to the aqueous preparations of useful materials at least partly and preferably at least predominantly before they are spray-dried.

6. A process as claimed in claims 1 to 5, characterized in that corresponding useful materials from the field of wetting agents, detergents and/or cleaning products, for example inorganic useful materials binding water of crystallization from the classes of builder components, washing alkalis and/or fillers, or organic useful materials capable of binding water by absorption are used as the auxiliaries for binding the residual water.

7. A process as claimed in claims 1 to 6, characterized in that spray-dried material still containing residual water is subjected to an at least one-stage aftertreatment which leads to homogenization of the residual moisture in the primary material removed from the spray-drying zone and/or is carried out in the form of an after-drying step, the aftertreatments preferably being carried out in a fluidized bed.

8. A process as claimed in claims 1 to 7, characterized in that fluidized-bed after-drying is also carried out with superheated steam as the hot gas stream while homogenization of the residual moisture is preferably carried out with ambient air.

9. A process as claimed in claims 1 to 8, characterized in that the drying step with superheated steam in the spray-drying zone is terminated at residual water contents of from about 1 to 20% by weight and preferably from about 5 to 15% by weight and the content of free water which is not bound as water of crystallization is preferably limited to values of at most about 10% by weight (percentages by weight based on the weight of the fine-particle material removed from the spray-drying zone).

10. A process as claimed in claims 1 to 9, characterized in that selected individual components of organic or inorganic character, preferably from the classes of surfactants or emulsifiers or builders and, more particularly, from the field of useful materials for laundry detergents are recovered as the useful materials in the form of free-flowing dry material and mixtures thereof with water-soluble salts preferably capable of binding water of crystallization can also be subjected to the process to guarantee pourability and stability in storage and/or to adjust the apparent density.

11. A process as claimed in claims 1 to 10, characterized in that mixtures of useful materials for the production of laundry detergents which preferably contain surfactants together with builders and, if desired, washing alkalis and/or neutral salts are subjected to the process, the multicomponent mixtures preferably being at least partly capable of binding and/or fixing residual water, more particularly in the form of water of crystallization.

12. A process as claimed in claims 1 to 11, characterized in that spray drying is carried out with steam at a temperature of or above 250°C and, more particularly, at a temperature of at least about 300°C as the hot gas stream, corresponding temperatures of the gas phase also being applied in an optionally following fluidized.

13. A process as claimed in claims 1 to 12, characterized in that the spray drying zone is operated in co-current or countercurrent and the free-flowing dry material is removed from the circuit.

14. A process as claimed in claims 1 to 13, characterized in that steam or water removed from the circuit and condensed are added to the aqueous preparations for drying in the spray-drying zone together with any useful material carried over which is present therein.

15. The use of the process claimed in claims 1 to 14 for the recovery of free-flowing surfactant solids, more particularly anionic surfactants based on natural materials, which may also be present in admixture with, in particular, soluble inorganic salts for guaranteeing pourability and/or apparent density.

16. The use of the process claimed in claims 1 to 14 for the production of dried silicate-based useful materials which may be used in particular in laundry detergents and which include corresponding swellable and/or non-swellable representatives, such as layer silicates, for example bentonites, and/or zeolite compounds, more particularly detergent-quality zeolite NaA.

17. The use of the process claimed in claims 1 to 14 for the recovery of laundry detergent tower powders to which temperature-sensitive and/or steam-volatile components may be added for the production of the final laundry detergent.

## Revendications

1. Procédé d'obtention de produits de valeur ou de mélanges de produits de valeur solides, finement divisés pulvérulents ou aptes au ruissellement, qui conviennent comme produits mouillants lessiviels et/ou nettoyants et/ou pour l'utilisation dans ces produits, à partir de leurs préparations aqueuses, par atomisation dans un courant de gaz chaud contenant de la vapeur d'eau, au voisinage de la pression atmosphérique, procédé dans lequel on opère dans le système fermé avec un courant circulant de vapeur d'eau, auquel est retirée la proportion d'eau vaporisée de la matière utilisée et est à nouveau amenée la quantité d'énergie cédée dans la phase de séchage,
caractérisé en ce qu'
- on opère avec de la vapeur surchauffée comme courant de gaz chaud, chauffée à des températures d'utilisation supérieures à 150°C et de préférence à au moins 200°C,
- en outre, le séchage du produit particulier est interrompu avant son risque dû à un effet thermique, l'aptitude à la mise en tas au ruissellement lors du stockage du produit partiellement séché étant assuré par addition de composants du mélange qui sont aptes à lier des quantités d'eau limitées et/ou un post-traitement étant ajouté pour homogénéiser la teneur en humidité dans le produit particulier et/ou étant prévu dans des conditions qui ménagent le produit, tandis qu'au moins une partie de courant partiel de vapeur retiré du circuit est condensée et est utilisée dans un lavage humide pour purifier le courant partiel de vapeur retiré des parties de matières entraînées et ensuite est ramenée dans le procédé de séchage avec les parties de matière valable sorties du cycle présentes dans les matières entraînées.

2. Procédé selon la revendication 1,
caractérisé en ce qu'
on utilise des préparations aqueuses de produits ou de mélanges de produits qui ne sont pas dégradés sous l'effet de courte durée de l'eau ou de la vapeur d'eau dans l'intervalle de température de 100 à 110°C et qui résistent sans dommage à cet intervalle de température au moins 0,5 à 1 min. dans la forme de préparation utilisée.

3. Procédé selon les revendications 1 et 2,
caractérisé en ce qu'
on soumet au procédé des préparations aqueuses de produits minéraux et/ou organiques hydrosolubles ou insolubles de produits mouillants, lavables et/ou nettoyants, comme des composants à effet tensioactif ou émulsionnant, des substances de structure ou des composants adjuvants minéraux et/ou organiques, des alcalis de lavage, des fixateurs ou des sels neutres, des assouplissants textiles, des activateurs de blanchiment, des additifs pour améliorer le pouvoir d'anti-redéposition comme des inhibiteurs de grisaillement et des abrasifs.

4. Procédé selon les revendications 1 à 3,
caractérisé en ce qu'
on utilise des additifs pour fixer l'eau résiduelle qui, en tant que solides particulaires pour fixer l'eau, par exemple par son incorporation comme eau de cristallisation ou par liaison d'absorption et on les utilise dans un mode de réalisation au moins en quantité suffisante pour garantir l'aptitude à la mise en tas et la stabilité au stockage.

5. Procédé selon les revendications 1 à 4,
caractérisé en ce qu'
on ajoute les additifs fixant l'eau résiduelle au moins partiellement, de préférence au moins en majorité aux préparations aqueuses de produits avant leur atomisation.

6. Procédé selon les revendications 1 à 5,
caractérisé en ce qu'
on utilise comme additifs fixant l'eau résiduelle des produits correspondants du domaine des produits mouillants, lavables et/ou nettoyants, par exemple des produits minéraux fixant l'eau de cristallisation des classes des composants adjuvants, des alcalis de lavage et/ou des fixateurs ou des produits utiles organiques qui peuvent fixer l'eau par absorption.

7. Procédé selon les revendications 1 à 6,
caractérisé en ce qu'
on soumet le produit de l'atomisation contenant encore de l'eau résiduelle à au moins une étape de post-traitement qui conduit à une homogénéisation de l'humidité résiduelle dans le produit obtenu initialement et soutiré de la zone ct'atomiseur et/ou à un post-séchage, en réalisant de préférence de tels post-traitements dans un lit fluidisé.

8. Procédé selon les revendications 1 à 7,
caractérisé en ce qu'
on réalise aussi un post-traitement en lit fluidisé avec de la vapeur surchauffée comme gaz chaud, tandis qu'on réalise la simple homogénéisation de l'humidité résiduelle avec l'air ambiant.

9. Procédé selon les revendications 1 à 8,
caractérisé en ce qu'
on interrompt l'étape de séchage avec de la vapeur surchauffée dans la zone d'atomisation à des teneurs résiduelles en eau comprises entre environ 1 et 20 % en poids, de préférence entre environ 5 et 15 % en poids, en limitant de préférence la teneur en eau libre, non liée comme eau de cristallisation à des valeurs au plus égales à 10 % en poids environ, le % en poids étant toujours rapporté au poids du produit fin soutiré de la zone d'atomisation.

10. Procédé selon les revendications 1 à 9,
caractérisé en ce qu'
on obtient comme produits de valeurs des composants individuels de nature organique ou minérale, de préférence des classes des tensioactifs ou des émulsionnants ou des substances de structure ou adjuvants, notamment dans le domaine des produits valables pour produits de lavage textiles, comme produit sec apte au ruissellement et on peut soumettre au procédé leurs mélanges à des sels hydrosolubles ou de préférence capables de fixer de l'eau de cristallisation pour garantir l'aptitude au ruissellement et la stabilité au stockage et/ou pour ajuster la densité apparente.

11. Procédé selon les revendications 1 à 10,
caractérisé en ce qu'
on sèche les mélanges de produits pour constituer des produits de lavage textiles qui contiennent des tensioactifs de préférence avec des substances de structure ou adjuvants et le cas échéant des alcalis de lavage et/ou des sels neutres, de préférence une partie des mélanges de plusieurs substances pouvant piéger et fixer l'eau résiduelle, notamment sous forme d'eau de cristallisation.

12. Procédé selon les revendications 1 à 11,
caractérisé en ce que
lors de l'atomisation à la vapeur d'eau comme gaz chaud on opère à une température d'utilisation de ou au-dessus de 250°C et en particulier à des températures d'utilisation au moins d'environ 300°C, en pouvant aussi opérer dans un lit fluidisé, éventuellement installé après avec des températures de la phase gazeuse correspondantes.

13. Procédé selon les revendications 1 à 12,
caractérisé en ce qu'
il opère dans la zone d'atomisation dans le même sens ou à contre-courant et le produit sec apte à l'écoulement est sorti du circuit.

14. Procédé selon les revendications 1 à 13,
caractérisé en ce qu'
on introduit dans la zone d'atomisation les fractions d'eau ou de vapeur d'eau condensée sorties du circuit, le cas échéant avec les fractions de produit présentes entraînées dans les préparations aqueuses destinées à être séchées.

15. Utilisation du procédé selon les revendications 1 à 14,
pour obtenir des solides tensioactifs aptes au ruissellement notamment des tensioactifs à base de produits naturels, qui peuvent être aussi en mélange avec des sels minéraux solubles, notamment pour garantir l'aptitude au ruissellement et/ou la densité apparente.

16. Utilisation du procédé selon les revendications 1 à 14,
pour fabriquer des produits séchés à base de silicate qui peuvent trouver une utilisation notamment dans les produits de lavage textiles et qui comprennent les représentants correspondants gonflants et/ou non gonflants tels que des silicates feuilletés, par exemple la bentonite, et/ou des composés de zéolithes, notamment la zéolithe NaA en qualité pour produits lessiviels.

17. Utilisation du procédé selon les revendications 1 à 15,
pour obtenir des poudres atomisées de produits de lavage textiles dont on peut ajouter les composants sensibles à la température et/ou volatils à la vapeur d'eau pour constituer le produit de lavage textile terminé.
